# EUROPEAN PATENT SPECIFICATION

(11) **EP 4 089 286 B1**
(45) Date of publication and mention of the grant of the patent: **28.08.2024**
(21) Application number: 22169823.6
(22) Date of filing: 25.04.2022
(51) Int. Cl.: F04D 19/00, F04D 29/52, F04D 29/66

(54) **REVERSIBLE FAN**
UMKEHRLÜFTER
VENTILATEUR RÉVERSIBLE

(30) Priority: 12.05.2021 JP 2021081097
(43) Date of publication of application: 16.11.2022
(73) Proprietor: Sanyo Denki Co., Ltd., Tokyo 170-8451 (JP)
(72) Inventor: YAMAZAKI, Yoshihisa, Tokyo, 170-8451 (JP)
(74) Representative: Mathys & Squire

(56) References cited:
- DE-A1- 2 607 159
- US-A1- 2012 213 650
- US-A1- 2014 056 742
- US-A1- 2015 132 121
- US-A1- 2018 087 440
- US-B2- 7 481 615

## Description

### Technical Field

The present disclosure relates to a reversible fan.

### BACKGROUND

A reversible fan that produces a current of air in the normal direction and the reverse direction is known from, for example, Japanese Patent No. 6802022 and DE 26 07 159 A1.

DE 26 07 159 A1 describes an axial-flow fan, the impeller of which comprises an impeller hub and impeller blades rotatably mounted therein, having a device for pivoting the impeller blades from a starting position into an end position by utilizing the inertial force occurring during acceleration of the impeller and against a restoring force, e.g. a spring force which swings the impeller blades back into the starting position when the impeller is stopped, further comprising a locking device, the movable part of which is designed as a centrifugal weight and retains the impeller blades above a certain impeller speed, wherein the impeller blades, when they are in the starting position, are in the conveying position which is effective for one direction of rotation and thus for one conveying direction and in that the impeller blades can be pivoted from the starting position into the end position, in which the impeller blades are in a conveying position which is effective for the other conveying direction, only when they are reversed in the other direction of fan rotation, and in that, furthermore, the locking device retains the impeller blades either in the starting position or in the end position, depending on the direction of fan rotation.

### SUMMARY

The present disclosure provides a reversible fan according to claim 1. The reversible fan includes an impeller configured to be rotatable about a rotation axis and having a plurality of blades radially attached to the perimeter of the impeller, wherein with rotation of the blades, the impeller is able to provide a current of air either in a normal direction or in a reverse direction, where a direction where air is discharged when the impeller rotates in a normal rotation direction is the normal direction and where a direction where wind is discharged when the impeller rotates in a reverse rotation direction is the reverse direction; a motor configured to rotate the impeller; a motor configured to rotate the impeller, , said motor being assembled in the impeller in such a manner as to be placed on the normal direction side relative the impeller; a base portion supporting the motor and being provided in such manner a to cover the normal direction side of the motor; and a tubular frame housing the impeller and the motor and the base portion . The reversible fan further comprises a fin protruding inward in a radial direction from an inner peripheral surface of the frame; the fin including a first curved surface, a second curved surface, and an edge, the first curved surface forming a surface in the normal rotation direction of the fin and protruding in the normal rotation direction, the second curved surface forming a surface in the reverse rotation direction of the fin and being recessed in the normal rotation direction, and the edge connecting the first and second curved surfaces. The fin is formed in the form of a thin plate including the first curved surface as a front, outer side of the fin and the second curved surface as a back, inner side of the fin and providing an opening portion that is open to a normal rotation direction of the impeller and open to the current of air in the normal direction when the impeller rotates in the normal rotation direction, such that a separation space is formed between the second curved surface of the fin and the inner peripheral surface of the frame, the separation space being configured in such a manner that, when the impeller rotates in the reverse rotation direction, a part of the current of air in the reverse direction is separated to flow in the separation space at an end of the edge in the reverse rotation direction. The fin has a shape that allows producing louder noise upon producing the current of air in the normal direction than upon producing the current of air in the reverse direction.

### BRIEF DESCRIPTION OF DRAWINGS

Fig. 1 is a perspective view of a reversible fan according to an embodiment of the present disclosure as viewed from the reverse direction;
Fig. 2 is a partial enlarged view illustrating a fin provided in an area A in Fig. 1;
Fig. 3 is a cross-sectional view taken along line B-B in Fig. 2;
Fig. 4 is a diagram illustrating the flow of wind around the fin at times of producing a current of air in the normal direction;
Fig. 5 is a diagram illustrating the flow of wind around the fin at times of producing a current of air in the reverse direction;
Fig. 6 is a perspective view illustrating a fin of a first comparative example, not according to the claimed invention;
Fig. 7 is a perspective view illustrating a fin of a second comparative example, not according to the claimed invention;
Fig. 8 is a perspective view illustrating a fin of a third comparative example, not according to the claimed invention;
Fig. 9 is a cross-sectional view illustrating a fin of a first modification;
Fig. 10 is a cross-sectional view illustrating a fin of a second modification;
Fig. 11 is a cross-sectional view illustrating a fin of a third modification;
Fig. 12 is a cross-sectional view illustrating a fin of a fourth modification;
Fig. 13 is a cross-sectional view illustrating a fin of a fifth modification;
Fig. 14 is a diagram illustrating a fin of a sixth modification;
Fig. 15 is a diagram illustrating a fin of a seventh modification; and
Fig. 16 is a diagram illustrating a fin of an eighth modification.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details, the scope of the invention being solely defined by the claims. In other instances, well-known structures and devices are schematically shown in order to simplify the drawing.

Such a reversible fan is attached to, for example, the wall of a house. In some cases, the reversible fan is used to draw outside air into the room and increase the room temperature when the outside air is warmer, or discharge the air in the room to the outside and decrease the temperature when the room temperature is high. At this point in time, if the noise generated when the outside air is drawn in is different from the noise generated when the air in the room is discharged, the resident may suspect that the fan is faulty.

If equal noise characteristics are required upon blowing air in the normal and reverse directions in this manner, the idea of lowering the noise level at times of blowing air in the reverse direction to adjust to the noise level at times of blowing air in the normal direction, which is lower, is generally adopted.

However, in the embodiment, in contrast to such an idea, it has been realized that there is no problem in making the noise levels equal by increasing the noise level at times of blowing air in the normal direction, depending on the use. For example, in the above-mentioned use, the noise levels at times of blowing air in the normal and reverse directions are not equal; therefore, the apparatus is suspected to be faulty. Hence, even if the noise levels at times of blowing air in the normal and reverse directions are regularly high, as long as the noise levels are equal, the apparatus is not suspected to be faulty.

Hence, an object of the present disclosure is to provide a reversible fan that can make the noise level at times of blowing air in the normal direction equal to the noise level at times of blowing air in the reverse direction by increasing the noise level at times of blowing air in the normal direction.

According to the embodiment, it is possible to provide a reversible fan that can make the noise level at times of blowing air in the normal direction equal to the noise level at times of blowing air in the reverse direction by increasing the noise level at times of blowing air in the normal direction.

The embodiment of the present disclosure is described hereinafter with reference to the drawings. Descriptions of members having the same reference numerals as members that have already been described in the detailed description are omitted for the sake of convenience. Moreover, the dimensions of each member illustrated in the drawings may be different from actual dimensions thereof for the convenience of description.

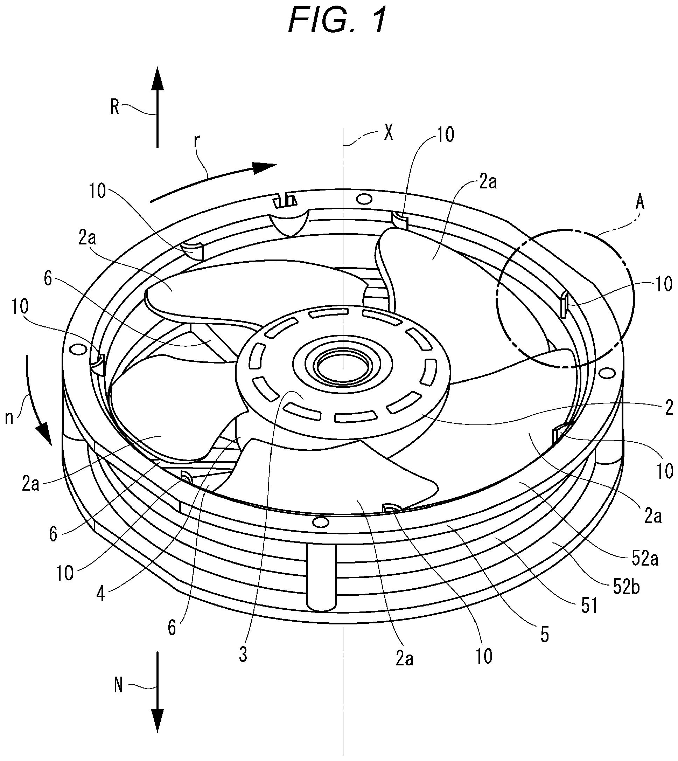

Fig. 1 is a perspective view of a reversible fan 1 according to the embodiment. As illustrated in Fig. 1, the reversible fan 1 includes an impeller 2 that can rotate about a rotation axis X, a motor 3 that rotates the impeller 2, a base portion 4 that supports the motor 3, and a tubular frame 5 where these members are housed. The impeller 2, the motor 3, and the base portion 4 are housed in the frame 5 in such a manner as to overlap along a direction of the rotation axis X.

In the embodiment, a direction (an arrow N direction) where air (a current of air) is discharged when the impeller 2 of the reversible fan 1 illustrated in Fig. 1 rotates in an arrow n direction (a normal rotation direction) is referred to as the normal direction of the reversible fan 1. Moreover, a direction (an arrow R direction) where air (a current of air) is discharged when the impeller 2 rotates in an arrow r direction (a reverse rotation direction) is referred to as the reverse direction of the reversible fan 1.

The reversible fan 1 is a fan that can blow air (produce a current of air) in both of the normal and reverse directions.

The impeller 2 is formed in a substantially cup shape. A plurality of (five in the example illustrated in the drawing) blades 2a is radially attached to the perimeter of the impeller 2. The blades 2a are attached to the impeller 2 in such a manner that surfaces of the blades 2a are inclined with respect to an axial direction (the same direction as the rotation axis X) of a rotating shaft portion of the reversible fan 1. With the rotation of the blades 2a, the impeller 2 produces a current of air in the normal or reverse direction.

The motor 3 is provided in the impeller 2. The motor 3 is configured as, for example, an outer rotor brushless motor. The motor 3 includes a stator, and a rotor that is placed outward of the stator. The rotor portion of the motor 3 in the impeller 2 is fixed to the impeller 2. The motor 3 is assembled in the impeller 2 in such a manner as to be placed on the front side (the normal direction side) relative to the impeller 2.

The base portion 4 is formed in the form of, for example, a circular cup. The base portion 4 is provided in such a manner as to cover the front side of the motor 3. The base portion 4 supports the stator portion of the motor 3. The base portion 4 is assembled in the frame 5 in such a manner as to be placed on the front side relative to the motor 3.

The base portion 4 is supported by a plurality of spokes 6. Each of the spokes 6 extends radially in the radial direction from a peripheral portion of the base portion 4 and is connected to an inner peripheral surface of the frame 5. The base portion 4 supported by the spokes 6 is attached at a position close to the front side of the tubular frame 5 extending along the rotation axis X.

The frame 5 includes a main body portion 51 forming the tubular part, and flange portions 52a and 52b provided respectively on outer regions of opposite ends of the main body portion 51. The frame 5 is provided with a plurality of fins 10 protruding inward in the radial direction from the inner peripheral surface of the frame 5. If the number of the blades 2a is five as in this example, the number of the fins 10 is desirably, for example, 7 to 9, or 11 to 14. However, the number of the fins 10 that is n times the number of the blades (10 (n = 2) in the example illustrated in the drawing) is excluded since acoustic resonance tends to occur.

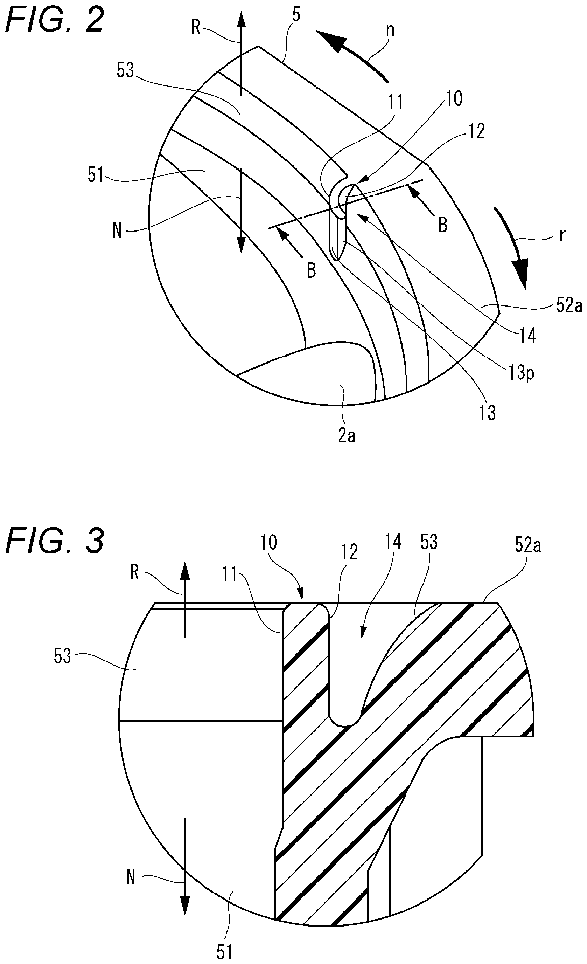

Next, the fin 10 provided to the frame 5 is described with reference to Figs. 2 and 3.

Fig. 2 is a partial enlarged view illustrating the fin 10 provided in an area A in Fig. 1. Fig. 3 is a cross-sectional view taken along line B-B in Fig. 2.

As illustrated in Figs. 2 and 3, the fin 10 is provided at an end in the reverse direction (the arrow R direction) of the main body portion 51 of the frame 5 in the direction of the rotation axis X. The fin 10 extends along the direction of the rotation axis X. An inner periphery at the end in the reverse direction of the main body portion 51 on the inner peripheral surface of the frame 5 is provided with a taper surface 53 that expands the diameter in the reverse direction. The fin 10 is provided in such a manner as to protrude inward in the radial direction from the taper surface 53 of the main body portion 51. Alternatively, the fin 10 is provided in such a manner as to protrude inward in the radial direction from a surface in an area lying across the taper surface 53 of the main body portion 51 and the inner peripheral surface of the main body portion 51 contiguous with the taper surface 53. In the example illustrated in the drawing, the taper surface 53 of the main body portion 51 is formed in the form of a curved surface protruding inward in the radial direction.

The fin 10 is formed in such a manner that a width thereof in the peripheral direction is, for example, 3° to 40° with respect to the inner peripheral surface of the frame 5. If the diameter of the reversible fan 1 is, for example, 160 mm, the fin 10 is formed in such a manner that the width is 3° to 7° with respect to the inner peripheral surface of the frame 5. If the diameter is 136 to 126 mm, the fin 10 is formed in such a manner that the width is 4° to 10°. If the diameter is 80 mm, the fin 10 is formed in such a manner that the width is 5° to 15°. If the diameter is 40 mm, the fin 10 is formed in such a manner that the width is 10° to 30°. Moreover, the fin 10 is formed in such a manner as to have a height at which the fin 10 does not come into contact with the blades 2a of the impeller 2 in the direction where the fin 10 protrudes inward in the radial direction. Furthermore, the fin 10 is formed in such a manner as to have a length in the direction of the rotation axis X within a range that does not hinder the path of the impeller 2.

The fin 10 includes a first curved surface 11 forming a surface in the normal rotation direction (the arrow n direction), a second curved surface 12 forming a surface in the reverse rotation direction (the arrow r direction), and an edge 13 connecting the first curved surface 11 and the second curved surface 12. The first curved surface 11 is formed as a curved surface protruding in the normal rotation direction. The second curved surface 12 is formed as a curved surface recessed in the normal rotation direction. As illustrated in the drawings, the fin 10 is formed in the form of a thin plate including the first curved surface 11 as the front side and the second curved surface 12 as the back side.

A separation space 14 where a part of a current of air in a predetermined direction flows is formed between the second curved surface 12 of the fin 10 and the inner peripheral surface of the frame 5 facing the second curved surface 12. In the example illustrated in the drawings, the separation space 14 is formed between the second curved surface 12 of the fin 10 and the taper surface 53 of the main body portion 51 of the frame 5.

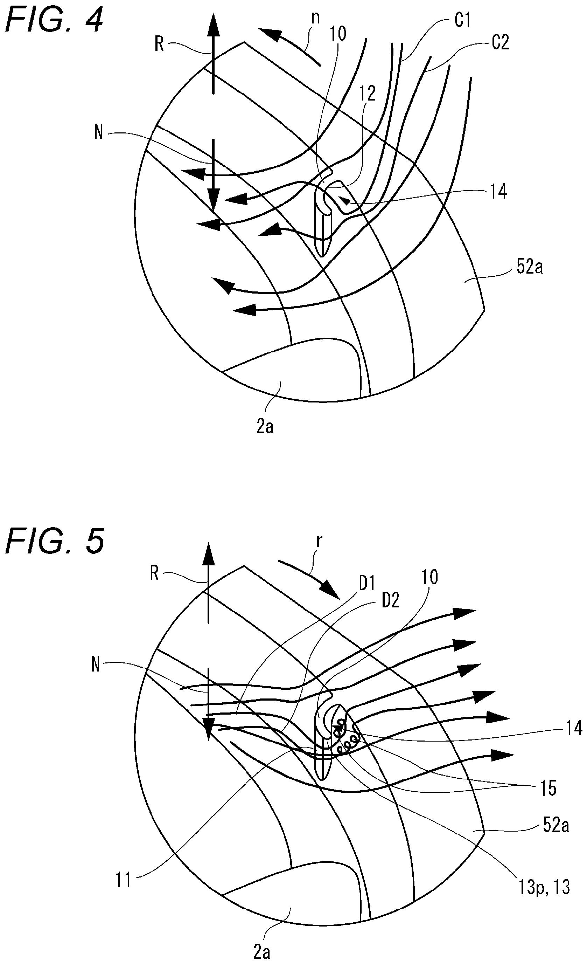

Next, the flow of wind in the reversible fan 1 is described with reference to Figs. 4 and 5. Fig. 4 illustrates the flow of wind around the fin 10 at times of producing a current of air in the normal direction in the reversible fan 1. Fig. 5 illustrates the flow of wind around the fin 10 at times of producing a current of air in the reverse direction in the reversible fan 1.

A part of a current of air that is produced in the reverse direction when the impeller 2 is rotated in the reverse rotation direction is separated by an end 13p in the reverse rotation direction at the edge 13 of the fin 10, and flows into the separation space 14. Moreover, a part of a current of air that is produced in the normal direction when the impeller 2 is rotated in the normal rotation direction flows into the separation space 14.

The fin 10 includes an opening portion that is open to the normal rotation direction of the impeller and that is open to the airflow in the normal direction. On the other hand, the fin 10 is formed in a shape that has a recess for the airflow in the normal direction. In other words, the fin 10 is formed in such a manner that the airflow in the reverse direction has smaller fluid resistance than the airflow in the normal direction. The fin 10 is configured in such a manner that the airflow hitting the fin 10 produces noise. The fin 10 is formed in the shape that allows the airflow in the normal direction to produce louder noise than the airflow in the reverse direction.

As illustrated in Fig. 4, when in the reversible fan 1 the impeller 2 rotating in the normal rotation direction (the arrow n direction) produces a current of air in the normal direction (the arrow N direction), the current of air enters the frame 5 through an opening in the reverse direction of the frame 5. A part of the airflow then flows into the separation space 14 of the fin 10 provided at the end in the reverse direction of the main body portion 51. Hence, as indicated by, for example, arrows C1 and C2, the airflow flowing into the separation space 14 is blown and disturbed on the second curved surface 12 of the fin 10. Hence, the airflow is not smoothly taken into the frame 5. At this point in time, noise is produced since the airflow is obstructed by the fin 10.

On the other hand, as illustrated in Fig. 5, when in the reversible fan 1 the impeller 2 rotating in the reverse rotation direction (the arrow r direction) produces a current of air in the reverse direction (the arrow R direction), the current of air enters through an opening in the normal direction of the frame 5. At this point in time, a part of the airflow flowing out of the opening in the normal direction hits the first curved surface 11 of the fin 10 provided at the end in the reverse direction of the main body portion 51. The airflow that has hit the first curved surface 11 flows along the first curved surface 11. Hence, the airflow flows smoothly without producing loud noise. Furthermore, the airflow that has flowed along the first curved surface 11 is separated by the end 13p of the edge 13 of the fin 10 from the first curved surface 11 (an arc portion) of the fin 10 into the separation space 14. Consequently, as indicated by, for example, arrows D1 and D2, the separated airflow creates a vortex (turbulent flow) 15 to some extent in the separation space 14. Hence, the flow becomes regular and stable. Consequently, the noise produced by the airflow in the reverse direction is reduced.

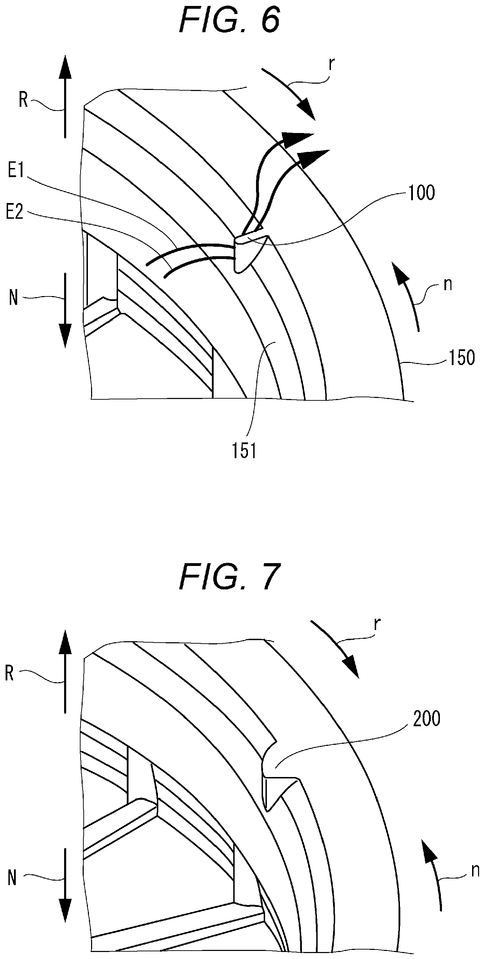

In contrast to claimed invention, fins of a first to a third comparative example having shapes where the noise level at times of blowing air in the normal direction is not equal to the noise level at times of blowing air in the reverse direction are described, using Figs. 6 to 8, to gain a deeper understanding of the fin 10 in the claimed invention.

Fig. 6 is a perspective view illustrating a fin 100 of the first comparative example (not according to the claimed invention). The fin 100 is formed as a straight projection protruding vertically and inward in the radial direction from an inner peripheral surface 151 of a frame 150. However, a surface in the normal rotation direction (the arrow n direction) of the fin 100 configured in this manner is formed as a flat surface. Hence, when the impeller 2 rotating in the reverse rotation direction (the arrow r direction) produces a current of air in the reverse direction (the arrow R direction), the airflow is obstructed by the fin 100 as indicated by arrows E1 and E2. Hence, the noise level at times of blowing air in the reverse direction increases. As a result, it is not possible to prevent a difference between the noise levels from being made.

Fig. 7 is a perspective view illustrating a fin 200 of the second comparative example (not according to the claimed invention). A surface in the normal rotation direction (the arrow n direction) of the fin 200 is formed as a curved surface as in the fin 10 of the above embodiment. Moreover, a surface in the reverse rotation direction (the arrow r direction) of the fin 200 is formed as a flat surface as in the fin 100 of the first comparative example. In a case of the fin 200 configured in this manner, when the impeller 2 rotating in the reverse rotation direction produces a current of air in the reverse direction (the arrow R direction), the noise level decreases slightly since the surface in the normal rotation direction of the fin 200 is formed as the curved surface. However, the surface in the reverse rotation direction of the fin 200 is formed as the flat surface. Therefore, when the impeller 2 rotating in the normal rotation direction produces a current of air in the normal direction (the arrow N direction), the noise level hardly increases. As a result, it is not possible to reduce the difference between the noise level at times of blowing air in the normal direction and the noise level at times of blowing air in the reverse direction.

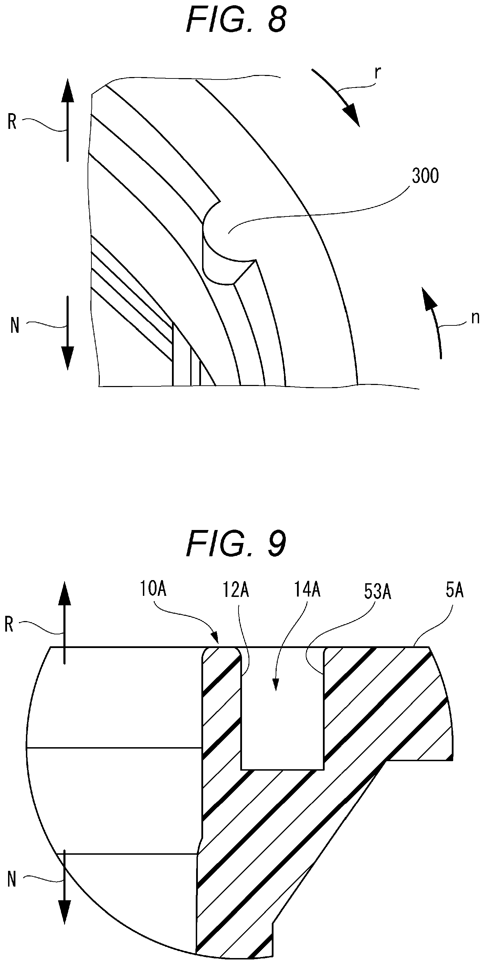

Fig. 8 is a perspective view illustrating a fin 300 of the third comparative example (not according to the claimed invention). A surface in the normal rotation direction (the arrow n direction) of the fin 300 is formed as a curved surface as in the fin 10 of the above embodiment. Moreover, a surface in the reverse rotation direction (the arrow r direction) of the fin 300 is formed as a curved surface protruding in the reverse rotation direction. However, in contrast to the fin 10 of the above embodiment, the separation space 14 is not provided. In a case of the fin 300 configured in this manner, when the impeller 2 rotating in the normal rotation direction produces a current of air in the normal direction (the arrow N direction), and also when the impeller 2 rotating in the reverse rotation direction produces a current of air in the reverse direction (the arrow R direction), airflow disturbance increases. As a result, the noise levels at times of blowing air in both directions increase.

In contrast, as illustrated in Fig. 2, the fin 10 is provided in the reversible fan 1 according to the embodiment in such a manner as to protrude inward in the radial direction from the inner peripheral surface of the frame 5. The fin 10 includes the first curved surface 11, the second curved surface 12, and the edge 13. The first curved surface 11 forms the surface in the normal rotation direction of the fin 10, and protrudes in the normal rotation direction. The second curved surface 12 forms the surface in the reverse rotation direction of the fin 10 and is recessed in the normal rotation direction. The edge 13 connects the first curved surface 11 and the second curved surface 12. The separation space 14 is formed between the second curved surface 12 and the inner peripheral surface of the frame 5. The separation space 14 separates a part of an airflow at the end 13p in the reverse rotation direction of the edge 13 when the impeller 2 rotates in the reverse rotation direction. Hence, the airflow in the normal rotation direction (normal direction) produced during positive rotation hits the second curved surface 12. The airflow that has hit the second curved surface 12 is disturbed by the second curved surface 12 and produces loud noise. On the other hand, the airflow that is produced during the reverse rotation of the impeller 2 and flows in the reverse rotation direction (reverse direction) hits the first curved surface 11. The airflow that has hit the first curved surface 11 flows along the first curved surface 11. Hence, the noise does not increase. Furthermore, a part of the airflow produced during the reverse rotation is separated by the separation space 14 and creates a vortex to some extent. Consequently, the airflow during the reverse rotation can be stabilized. Hence, the noise can be reduced. In this manner, it is possible to increase the noise at times of blowing air in the normal direction while reducing the noise at times of blowing air in the reverse direction. As a result, the noise level at times of blowing air in the normal direction can be made equal to the noise level at times of blowing air in the reverse direction.

Moreover, according to the reversible fan 1, the fin 10 has the recess for the airflow in the normal direction n. In other words, the fin 10 is configured in such a manner that the airflow in the reverse direction has smaller fluid resistance than the airflow in the normal direction. Hence, the fin 10 produces louder noise due to the airflow in the normal direction than due to the airflow in the reverse direction. Therefore, the noise level at times of blowing air in the normal direction can be made equal to the noise level at times of blowing air in the reverse direction. At this point in time, the noise level at times of blowing air in the normal direction can be made equal to the noise level at times of blowing air in the reverse direction without exerting influence on the airflow characteristics, static pressure characteristics, and power consumption of the reversible fan 1.

Moreover, according to the reversible fan 1, the taper surface 53 that expands the diameter in the reverse direction is formed at the end of the frame 5 in the reverse direction in the direction of the rotation axis X. The fin 10 is provided on the taper surface 53 of the frame 5 in such a manner as to extend in the direction of the rotation axis X. Such a structure facilitates removal of the frame 5 from a die even if the fin 10 is provided.

### (Modifications)

Next, modifications of the fin are described.

Fig. 9 is a cross-sectional view illustrating a fin 10A of a first modification. As illustrated in Fig. 9, the fin 10A is different from the fin 10 of the embodiment illustrated in Fig. 3 in the respect of being formed in such a manner that the shape of a separation space 14A in cross section becomes closer to a rectangle as compared with the fin 10. The fin 10A is formed in such a manner that a surface 53A on a frame 5A side forming the separation space 14A, that is, the surface 53A facing a second curved surface 12A of the fin 10A extends along the normal direction (the arrow N direction) of the rotation axis X.

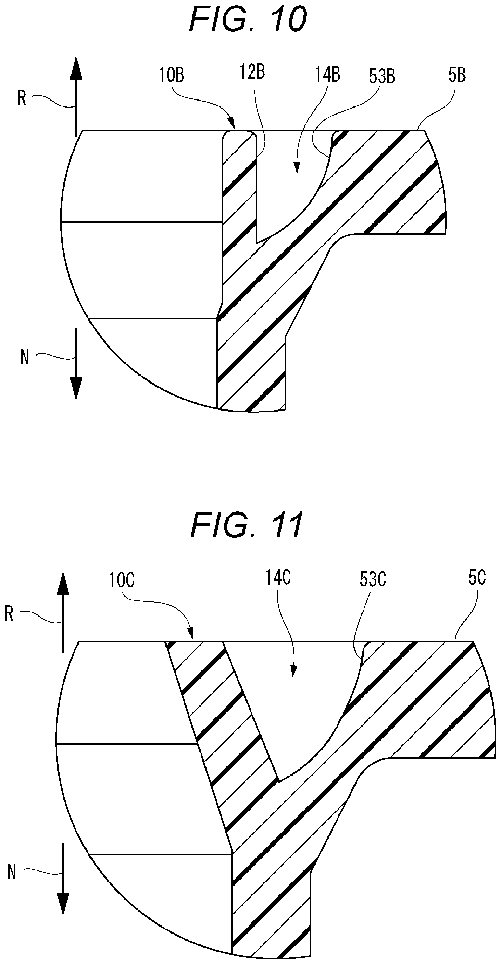

Fig. 10 is a cross-sectional view illustrating a fin 10B of a second modification. As illustrated in Fig. 10, the fin 10B is formed in such a manner that a surface 53B on a frame 5B side forming a separation space 14B, that is, the surface 53B facing a second curved surface 12B of the fin 10B is configured as a curved surface recessed outward in the radial direction. In this respect, the fin 10B is different from the fin 10 of the embodiment that includes the curved surface protruding inward in the radial direction. The shape of the curved surface recessed outward in the radial direction may be provided only to the surface 53B facing the second curved surface 12B. Alternatively, the recessed shape may be provided to the entire taper surface 53 of the main body portion 51 of the frame 5, the taper surface 53 being described in the embodiment.

Fig. 11 is a cross-sectional view illustrating a fin 10C of a third modification. As illustrated in Fig. 11, the fin 10C is different from the fin 10B of the second modification illustrated in Fig. 10 in the respect that the direction in which the fin 10C extends is inclined with respect to the direction of the rotation axis X. The fin 10C is provided in such a manner as to be inclined inward in the radial direction (in a direction away from a surface 53C on a frame 5C side forming a separation space 14C) in going toward the reverse direction (the arrow R direction). In this respect, the fin 10C is different from the fin 10B of the second modification provided in such a manner as to extend in the direction of the rotation axis X.

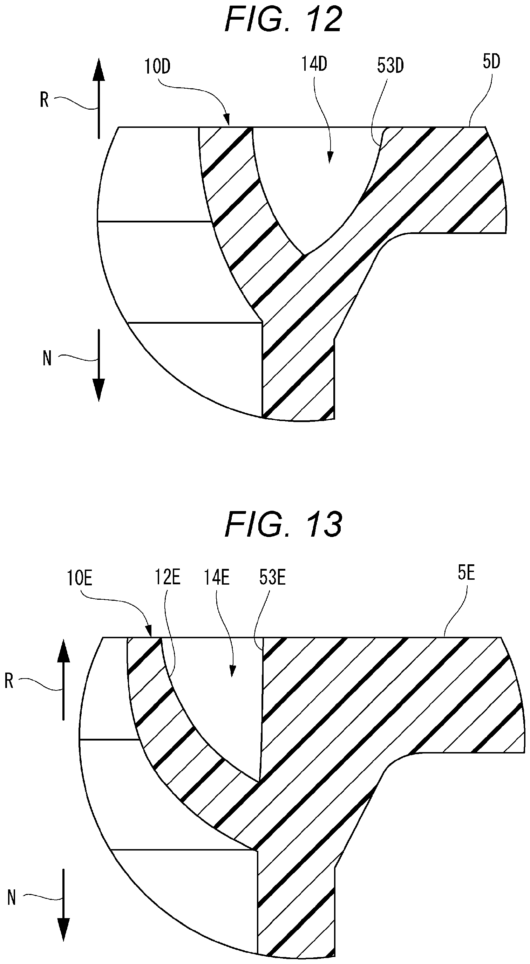

Fig. 12 is a cross-sectional view illustrating a fin 10D of a fourth modification. As illustrated in Fig. 12, the fin 10D is formed in such a manner as to be inclined inward in the radial direction (in a direction away from a surface 53D on a frame 5D side forming a separation space 14D) in going toward the reverse direction (the arrow R direction). In this respect, the fin 10D agrees with the fin 10C of the third modification illustrated in Fig. 11. However, the fin 10D is formed in such a manner as to include a curved surface protruding inward in the radial direction. In this respect, the fin 10C of the third modification without such a curved surface is different from the fin 10D.

Fig. 13 is a cross-sectional view illustrating a fin 10E of a fifth modification. As illustrated in Fig. 13, as compared with the fin 10D of the fourth modification illustrated in Fig. 12, on the fin 10E, a surface 53E on a frame 5E side forming a separation space 14E, that is, the surface 53E facing a second curved surface 12E of the fin 10E is formed along the direction of the rotation axis X. In this respect, the fin 10E is different from the fin 10D of the fourth modification in Fig. 12 that is formed in such a manner as to include the curved surface recessed outward in the radial direction.

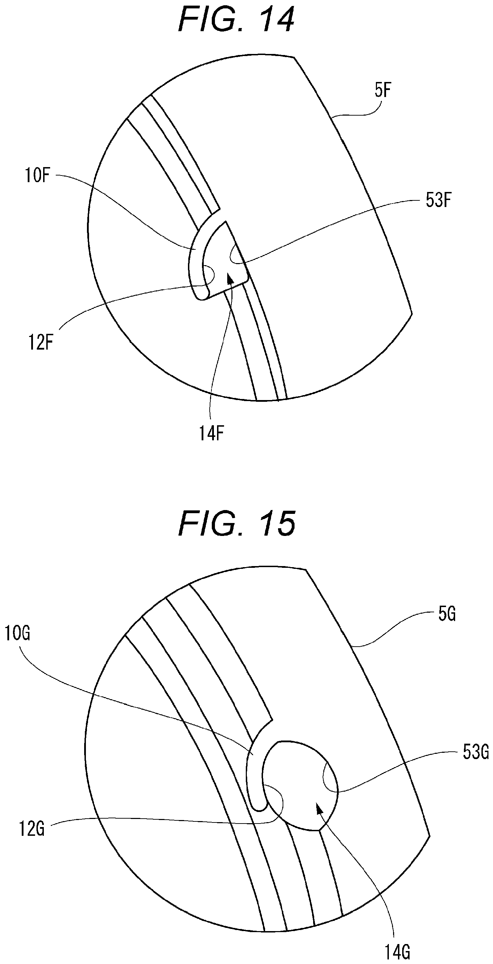

Fig. 14 is a diagram illustrating a fin 10F of a sixth modification. As illustrated in Fig. 14, on the fin 10F, a surface 53F on a frame 5F side forming a separation space 14F, that is, the surface 53F facing a second curved surface 12F of the fin 10F is formed along the direction of the rotation axis X. In this respect, the fin 10F is different from the fin 10 of the embodiment in Fig. 2 that is formed in such a manner as to include the curved surface protruding inward in the radial direction.

Fig. 15 is a diagram illustrating a fin 10G of a seventh modification. As illustrated in Fig. 15, on the fin 10G, a surface 53G on a frame 5G side forming a separation space 14G, that is, the surface 53G facing a second curved surface 12G of the fin 10G is formed by cutting out a peripheral wall of the frame 5G outward in the radial direction in the form of an arc. In this respect, the fin 10G is different from the fin 10 of the embodiment in Fig. 2 that is formed in such a manner as to include the curved surface protruding inward in the radial direction.

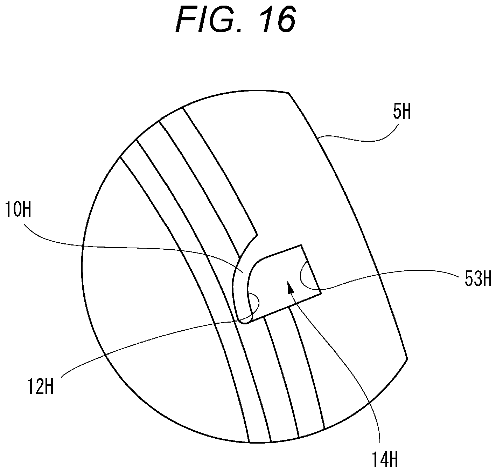

Fig. 16 is a diagram illustrating a fin 10H of an eighth modification. As illustrated in Fig. 16, as compared with the fin 10 of the embodiment illustrated in Fig. 2, on the fin 10H, a surface 53H on a frame 5H side forming a separation space 14H, that is, the surface 53H facing a second curved surface 12H of the fin 10H is formed by cutting out a peripheral wall of the frame 5H outward in the radial direction in the form of a rectangle. In this respect, the fin 10H is different from the fin 10 of the embodiment in Fig. 2 that is formed in such a manner as to include the curved surface protruding inward in the radial direction.

According to the fins 10A to 10H of the above modifications, the large separation spaces 14A to 14H can be secured. Hence, the noise level at times of blowing air in the normal direction can be increased. Consequently, the noise level at times of blowing air in the normal direction can be made equal to the noise level at times of blowing air in the reverse direction.

Up to this point several embodiments have been described. However, it is needless to say that the scope of the invention should not be construed in a limited manner by the description of the above-mentioned embodiments which are mere examples. Those skilled in the art understand that the invention can be modified in various manners within the scope of the claims The scope of the present invention should be determined on the basis of the claims.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A reversible fan (1) comprising:
an impeller (2) configured to be rotatable about a rotation axis (X) and having a plurality of blades (2a) radially attached to the perimeter of the impeller, wherein with rotation of the blades, the impeller is able to provide a current of air either in a normal direction (N) or in a reverse direction (R), where a direction where air is discharged when the impeller rotates in a normal rotation direction (n-direction) is the normal direction (N) and where a direction where wind is discharged when the impeller rotates in a reverse rotation direction (r-direction) is the reverse direction (R);
a motor (3) configured to rotate the impeller, said motor being assembled in the impeller in such a manner as to be placed on the normal direction side relative the impeller;
a base portion (4) supporting the motor and being provided in such manner as to cover the normal direction side of the motor,
a tubular frame (5) housing the impeller, the motor and the base portion; **characterized by**
a fin (10; 10A-H) protruding inward in a radial direction from an inner peripheral surface (53, 53A-53H) of the frame; wherein
the fin includes a first curved surface (11), a second curved surface (12; 12AH), and an edge (13),
the first curved surface forms a surface in the normal rotation direction (n-direction) of the fin, and protrudes in the normal rotation direction,
the second curved surface forms a surface in the reverse rotation direction (r-direction) of the fin, and is recessed in the normal rotation direction,
the edge connects the first and second curved surfaces, and wherein the fin (10) is formed in the form of a thin plate including the first curved surface (11) as a front, outer side of the fin and the second curved surface (12) as a back, inner side of the fin and providing an opening portion that is open to a normal rotation direction (n-direction) of the impeller and open to the current of air in the normal direction (N) when the impeller rotates in the normal rotation direction, such that a separation space (14; 14A-H) is formed between the second curved surface of the fin and the inner peripheral surface (53, 53A-53H) of the frame, the separation space being configured in such a manner that, when the impeller rotates in the reverse rotation direction, a part of the current of air in the reverse direction is separated to flow in the separation space at an end (13p) of the edge (13) in the reverse rotation direction.

2. The reversible fan according to claim 1, wherein the fin (10; 10A-H) is provided at an end in the reverse direction side of the frame in a direction of the rotation axis (X).

3. The reversible fan according to claim 1, wherein
an inner periphery at an end in the reverse direction side of the frame (5) on the inner peripheral surface of the frame is provided with a taper surface (53, 53B-D) that expands in diameter in the reverse direction (R), and
the fin (10, 10B-D) extends in a direction of the rotation axis.

4. The reversible fan according to claim 3, wherein the fin protrudes (10, 10B-D) inward in the radial direction from the taper surface (53, 53B-D).

5. The reversible fan according to claim 3 or 4, wherein the separation space (14; 14A-D) is formed between the second curved surface (12; 12A-D) of the fin (10; 10A-D) and the taper surface (53, 53B-D).

6. The reversible fan according to claim 1, wherein a part (53, 53B-D, 53G, 53H) of the inner peripheral surface of the frame (4), which faces the second curved surface (12) of the fin (10, 10B-D, 10G, 10H), is recessed outward in a radial direction.

## Patentansprüche

1. Umkehrlüfter (1), das Folgende umfassend:
ein Laufrad (2), das so konfiguriert ist, dass es um eine Drehachse (X) drehbar ist und eine Vielzahl von Blättern (2a) aufweist, die radial am Umfang des Laufrads angebracht sind, wobei das Laufrad bei Drehung der Blätter in der Lage ist, einen Luftstrom entweder in einer normalen Richtung (N) oder in einer umgekehrten Richtung (R) bereitzustellen, wobei eine Richtung, in der Luft ausgestoßen wird, wenn sich das Laufrad in einer normalen Drehrichtung (n-Richtung) dreht, die normale Richtung (N) ist und wobei eine Richtung, in der Wind ausgestoßen wird, wenn sich das Laufrad in einer umgekehrten Drehrichtung (r-Richtung) dreht, die umgekehrte Richtung (R) ist;
einen Motor (3), der so konfiguriert ist, dass er das Laufrad in Drehung versetzt, wobei der Motor so in das Laufrad eingebaut ist, dass er auf der Seite der normalen Richtung bezüglich des Laufrads angeordnet ist;
einen Basisabschnitt (4), der den Motor trägt und so beschaffen ist, dass er die normal ausgerichtete Seite des Motors abdeckt,
einen rohrförmigen Rahmen (5), der das Laufrad, den Motor und den
Basisabschnitt aufnimmt; **gekennzeichnet durch**
eine Rippe (10; 10A-H), die in einer radialen Richtung von einer inneren Umfangsfläche (53, 53A-53H) des Rahmens nach innen ragt; wobei
die Rippe eine erste gekrümmte Fläche (11) umfasst, eine zweite gekrümmte Fläche (12; 12A-H) und eine Kante (13),
die erste gekrümmte Fläche bildet eine Fläche in der normalen Drehrichtung (n-Richtung) der Rippe und ragt in der normalen Drehrichtung hervor,
die zweite gekrümmte Fläche bildet eine Fläche in der umgekehrten Drehrichtung (r-Richtung) der Rippe und ist in der normalen Drehrichtung vertieft,
die Kante die erste und die zweite gekrümmte Fläche verbindet, und wobei die Rippe (10) in Form einer dünnen Platte ausgebildet ist, welche die erste gekrümmte Fläche (11) als eine vordere, äußere Seite der Rippe und die zweite gekrümmte Fläche (12) als eine hintere, innere Seite der Rippe enthält und einen Öffnungsabschnitt bereitstellt, der zu einer normalen Drehrichtung (n-Richtung) des Laufrads offen ist und zu dem Luftstrom in der normalen Richtung (N) offen ist, wenn sich das Laufrad in der normalen Drehrichtung dreht, so dass ein Trennraum (14; 14A-H) zwischen der zweiten gekrümmten Fläche der Rippe und der inneren Umfangsfläche (53, 53A-53H) des Rahmens gebildet wird, wobei der Trennraum so konfiguriert ist, dass, wenn sich das Laufrad in der umgekehrten Drehrichtung dreht, ein Teil des Luftstroms in der umgekehrten Richtung getrennt wird, um in dem Trennraum an einem Ende (13p) der Kante (13) in der umgekehrten Drehrichtung zu strömen.

2. Umkehrlüfter nach Anspruch 1, wobei die Rippe (10; 10A-H) an einem Ende auf der Seite des Rahmens in umgekehrter Richtung in Richtung der Drehachse (X) vorgesehen ist.

3. Umkehrlüfter nach Anspruch 1, wobei
ein innerer Umfang an einem Ende in der umgekehrten Richtung des Rahmens (5) auf der inneren Umfangsfläche des Rahmens mit einer konischen Fläche (53, 53B-D) versehen ist, die sich im Durchmesser in der umgekehrten Richtung (R) erweitert, und
die Rippe (10, 10B-D) sich in Richtung der Drehachse erstreckt.

4. Umkehrlüfter nach Anspruch 3, wobei die Rippe (10, 10B-D) in radialer Richtung von der konischen Fläche (53, 53B-D) nach innen ragt.

5. Umkehrlüfter nach Anspruch 3 oder 4, wobei der Trennraum (14; 14A-D) zwischen der zweiten gekrümmten Fläche (12; 12A-D) der Rippe (10; 10A-D) und der konischen Fläche (53, 53B-D) gebildet wird.

6. Umkehrlüfter nach Anspruch 1, wobei ein Teil (53, 53B-D, 53G, 53H) der inneren Umfangsfläche des Rahmens (4), welcher der zweiten gekrümmten Fläche (12) der Rippe (10, 10B-D, 10G, 10H) zugewandt ist, in radialer Richtung nach außen vertieft ist.

## Revendications

1. Ventilateur réversible (1) comprenant :
une turbine (2) configurée pour être capable de rotation autour d'un axe de rotation (X) et ayant une pluralité de pales (2a) attachées de manière radiale au périmètre de la turbine, dans lequel avec la rotation des pales, la turbine est capable de fournir un courant d'air soit dans une direction normale (N) soit dans une direction inverse (R), où une direction où l'air est évacué quand la turbine tourne dans une direction de rotation normale (direction n) est la direction normale (N) et où une direction où le souffle est évacué quand la turbine tourne dans une direction de rotation inverse (direction r) est la direction inverse (R) ;
un moteur (3) configuré pour faire tourner la turbine, ledit moteur étant assemblé dans la turbine de manière à être placé sur le côté de direction normale par rapport à la turbine ;
une partie de base (4) supportant le moteur et étant fournie de manière à couvrir le côté de direction normale du moteur,
un cadre tubulaire (5) recevant la turbine, le moteur et la partie de base ; **caractérisé par** une ailette (10 ; 10A-H) faisant saillie vers l'intérieur dans une direction radiale depuis une surface périphérique interne (53, 53A-53H) du cadre ; dans lequel
l'ailette inclut une première surface incurvée (11), une deuxième surface incurvée (12 ; 12A-H), et un bord (13),
la première surface incurvée forme une surface dans la direction de rotation normale (direction n) de l'ailette, et fait saillie dans la direction de rotation normale,
la deuxième surface incurvée forme une surface dans la direction de rotation inverse (direction r) de l'ailette, et est renfoncée dans la direction de rotation normale,
le bord connecte les première et deuxième surfaces incurvées, et dans lequel l'ailette (10) est formée sous la forme d'une plaque mince incluant la première surface incurvée (11) comme un côté externe, avant de l'ailette et la deuxième surface incurvée (12) comme un côté interne, arrière de l'ailette et fournissant une partie d'ouverture qui est ouverte à une direction de rotation normale (direction n) de la turbine et ouverte au courant d'air dans la direction normale (N) quand la turbine tourne dans la direction de rotation normale, de sorte qu'un espace de séparation (14 ; 14A-H) est formé entre la deuxième surface incurvée de l'ailette et la surface périphérique interne (53, 53A-53H) du cadre, l'espace de séparation étant configuré, quand la turbine tourne dans la direction de rotation inverse, de manière à ce qu'une partie du courant d'air dans la direction inverse soit séparée pour s'écouler dans l'espace de séparation au niveau d'une extrémité (13p) du bord (13) dans la direction de rotation inverse.

2. Ventilateur réversible selon la revendication 1, dans lequel l'ailette (10 ; 10A-H) est fournie au niveau d'une extrémité dans le côté de direction inverse du cadre dans une direction de l'axe de rotation (X).

3. Ventilateur réversible selon la revendication 1, dans lequel
une périphérie interne au niveau d'une extrémité dans le côté de direction inverse du cadre (5) sur la surface périphérique interne du cadre est pourvue d'une surface conique (53, 53B-D) dont le diamètre augmente dans la direction inverse (R), et
l'ailette (10, 10B-D) s'étend dans une direction de l'axe de rotation.

4. Ventilateur réversible selon la revendication 3, dans lequel l'ailette fait saillie (10, 10B-D) vers l'intérieur dans la direction radiale depuis la surface conique (53, 53B-D).

5. Ventilateur réversible selon la revendication 3 ou 4, dans lequel l'espace de séparation (14 ; 14A-D) est formé entre la deuxième surface incurvée (12 ; 12A-D) de l'ailette (10 ; 10AD) et la surface conique (53, 53B-D).

6. Ventilateur réversible selon la revendication 1, dans lequel une partie (53, 53B-D, 53G, 53H) de la surface périphérique interne du cadre (4), qui fait face à la deuxième surface incurvée (12) de l'ailette (10, 10B-D, 10G, 10H), est renfoncée vers l'extérieur dans une direction radiale.
